# FASCICULE DE BREVET EUROPEEN

(11) **EP 0 629 100 B1**
(45) Date de publication et mention de la délivrance du brevet: **05.09.2001**
(21) Numéro de dépôt: 94401284.8
(22) Date de dépôt: 08.06.1994
(51) Int. Cl.: H04Q 11/04, H04J 3/16, H04J 3/06

(54) **Procédé et agencement pour une transmission en mode cellule d'informations fournies et restituées en mode circuit à bande étroite**
Verfahren und Vorrichtung zur Zellenübertragung von leitungsvermittelter Schmalbandinformation
Method and arrangement for transmitting in cell mode narrowband circuit switched information

(30) Priorité: 11.06.1993 FR 9307070
(43) Date de publication de la demande: 14.12.1994
(73) Titulaire: ALCATEL, 75382 Paris Cédex 08 (FR)
(72) Inventeur: Gass, Raymond, F-67150 Bolsenheim (FR)
(74) Mandataire: Schaub, Bernard

(56) Documents cités:
- EP-A- 0 394 051
- EP-A- 0 433 154
- EP-A- 0 488 399
- EP-A- 0 528 087
- DE-A- 4 218 053
- PROCEEDINGS OF THE IEEE 1992 CUSTOM INTEGRATED CIRCUITS CONFERENCE, Mai 1992, BOSTON US pages 14.3.1 - 14.3.4 G. C. HEINZE ET AL. 'A THREE CHIP SET for ATM SWITCHING'
- NEC RESEARCH AND DEVELOPMENT, vol.32, no.3, Juillet 1991, TOKYO JP pages 379 - 388 T. MURASE ET AL. 'Constant Bit Rate Services in ATM networks'
- GLOBECOM'92, vol.2, Décembre 1992, ORLANDO US pages 812 - 820 R. C. LAU ET AL. 'Synchronous Techniques for Timing Recovery in BISDN'

## Description

L'invention concerne un procédé et un agencement destiné à permettre une transmission, en mode cellule entre deux unités d'installation de télécommunications. d'informations qui sont fournies à l'une de ces unités et ultérieurement restituées par l'autre en mode circuit à bande étroite.

Ce procédé est plus particulièrement destiné à être mis en oeuvre dans le cadre d'installations de télécommunications qui sont composées d'unités dont certaines desservent des appareils et/ou équipements exploitant un mode circuit, alors que d'autres desservent des appareils et/ou équipements exploitant un mode cellule, lorsque ces installations comportent des liaisons entre unités spécifiquement organisées en fonction des unités qu'elles relient.

Il est notamment susceptible d'être mis en oeuvre dans le cadre d'installations de télécommunications telles qu'évoquées ci-dessus qui, éventuellement organisées en sous-ensembles modulaires susceptibles d'être géographiquement disséminés, sont conçues pour permettre la mise en communication d'appareils et équipements divers, ici indifféremment désignés par la suite sous l'appellation de terminaux. Ces derniers étant susceptibles de fonctionner selon des modes spécifiques différents et notamment pour certains en mode circuit, de type téléphonique numérique, pour d'autres en mode paquet, en mode circuit large bande, ou en mode cellule.

Il peut être intéressant d'utiliser pour la transmission d'informations émanant d'un de ces terminaux un mode différent de celui pour lequel est prévu ce terminal. Ceci est notamment le cas pour des terminaux fonctionnant en mode circuit, car le débit nominal de 2,048 Mbit/s prévu pour les liaisons multiplexes temporelles MIC de base est très inférieur au débit de 155,52 Mbit/s prévu pour les liaisons exploitées en mode cellule.

Dans le cas des installations envisagées, il est donc concevable d'utiliser les liaisons exploitées en mode cellule, notamment entre des sous-ensembles distants d'une installation, pour la mise en communication de terminaux qui ne sont eux-mêmes conçus que pour fonctionner en mode circuit, en particulier si ces derniers sont rattachés à des sous-ensembles différents uniquement reliés par des liaisons exploitées en mode cellule.

Le document DE 42 18 053 décrit un dispositif destiné à permettre une transmission, par l'intermédiaire d'une liaison exploitée en mode cellule entre deux unités d'installation de télécommunications, d'informations préalablement fournies multiplexées dans le temps et par conséquent sous forme modulaire, à une des deux unités par l'intermédiaire d'un ou de plusieurs canaux temporels élémentaires de liaison en mode circuit.

Un premier objet de l'invention est un procédé destiné à permettre une transmission, par l'intermédiaire d'une liaison exploitée en mode cellule entre deux unités d'installation de télécommunications, d'informations préalablement fournies sous forme multiplexée dans le temps et par conséquent sous forme modulaire à une des deux unités par l'intermédiaire d'un ou de plusieurs canaux temporels élémentaires de liaison en mode circuit à bande étroite, lorsque les deux unités sont respectivement régies, en mode circuit, de manière synchrone ou par deux horloges plésiochrones, consistant à :
- forcer la priorité de transmission, sur la liaison exploitée en mode cellule, de chaque module d'information préalablement en mode circuit qui est destiné à être communiqué d'une unité à destination de l'autre, afin que chacun de ces modules d'information soit inséré dans la première cellule qui est transmise par l'unité chargée de la transmission, après qu'il ait été reçu par cette dernière,
- et réinsérer cycliquement, dans un ou plusieurs canaux temporels déterminés, sous le contrôle de l'horloge régissant le mode circuit au niveau de l'unité destinataire, les dits modules d'information successivement communiqués en mode cellule à cette unité destinataire, en permettant ainsi la reconstitution intégrale des informations sous leur forme initiale ;
caractérisé en ce qu'il consiste en outre à aligner l'horloge régissant le mode circuit au niveau d'une unité destinataire sur une première horloge pilote de canaux temporels élémentaires de mode circuit à partir des données desquels ont été formés des modules d'information, successivement produits à un rythme de trame fixé par ladite première horloge et ultérieurement reçus en mode cellule par l'intermédiaire d'une unité exploitant les deux modes évoqués ci-dessus,
ledit alignement étant réalisé par l'intermédiaire d'un signal, de type valeur moyenne, obtenu des cellules reçues, à partir des occurrences d'un marqueur constitué par une combinaison caractéristique de données apparaissant au rythme de trame avec une gigue liée à la transmission par cellules pour les informations émanant d'au moins un ces canaux temporels transmis.

Un second objet de l'invention est un agencement pour la mise en oeuvre du procédé selon la revendication 1, pour installation de télécommunications comportant des unités supports de mode circuit à bande étroite pour des terminaux exploitant ce mode, ces unités étant reliées entre elles en point à point par des liaisons spécifiquement agencées et temporellement régies pour un tel mode, et des unités supports de mode cellule également reliées en point à point, par des liaisons spécifiquement agencées et régies pour ce mode cellule, via éventuellement un ou plusieurs éléments de commutation d'une organisation de commutation de cellule de l'installation comportant au moins deux unités mixtes reliées d'une part entre elles par liaison pour mode cellule et d'autre part chacune à une unité et/ou à des terminaux, supports de mode circuit ;
chaque unité mixte qui est munie d'un circuit de communication pour ses échanges en chacun des modes, de même que les unités avec lesquelles elle communique en l'un de ces modes, comportant de plus un circuit passerelle assurant la mise en cellule des modules d'information transmis par une liaison multiplexe temporelle de mode circuit au cours d'une trame et inversement la restitution des modules d'information contenues- dans une cellule reçue, dans la position temporelle qu'ils avaient originellement, avant passage en mode cellule, au cours de la trame temporelle au cours de laquelle ils sont restitués en mode circuit ;
caractérisé en ce qu'au moins une des unités mixtes qu'il comporte est munie de moyens pour aligner l'horloge pilote de mode circuit localement fournie par un module de base de temps qu'elle comporte, pour au moins un terminal et/ou une unité support de ce mode, sur une première horloge pilote régissant des canaux temporels élémentaires de mode circuit à partir des données desquels ont été formés des modules d'information, successivement produits à un rythme de trame fixé par cette première horloge et ultérieurement reçus en mode cellule par l'unité mixte ;
les dits moyens comportant un filtre fournissant un signal d'alignement d'horloge locale à partir des modules d'information reçus ;
ledit filtre produisant un signal d'alignement, de type valeur moyenne, à partir des occurrences d'un marqueur constitué par une combinaison caractéristique de données apparaissant au rythme de trame et avec une gigue liée à la transmission par cellule, pour les informations émanant d'au moins un des canaux temporels transmis.

L'invention, ses caractéristiques et ses avantages sont précisés dans la description qui suit en liaison avec les figures évoquées ci-dessous.

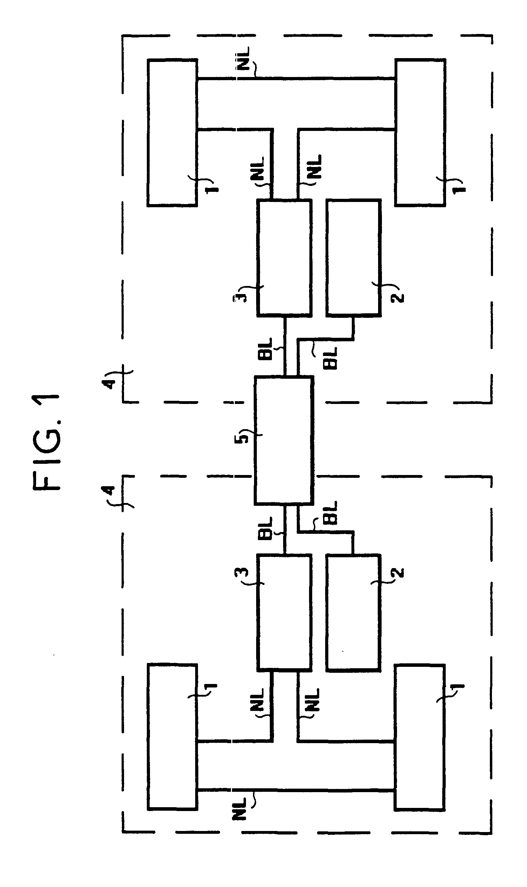

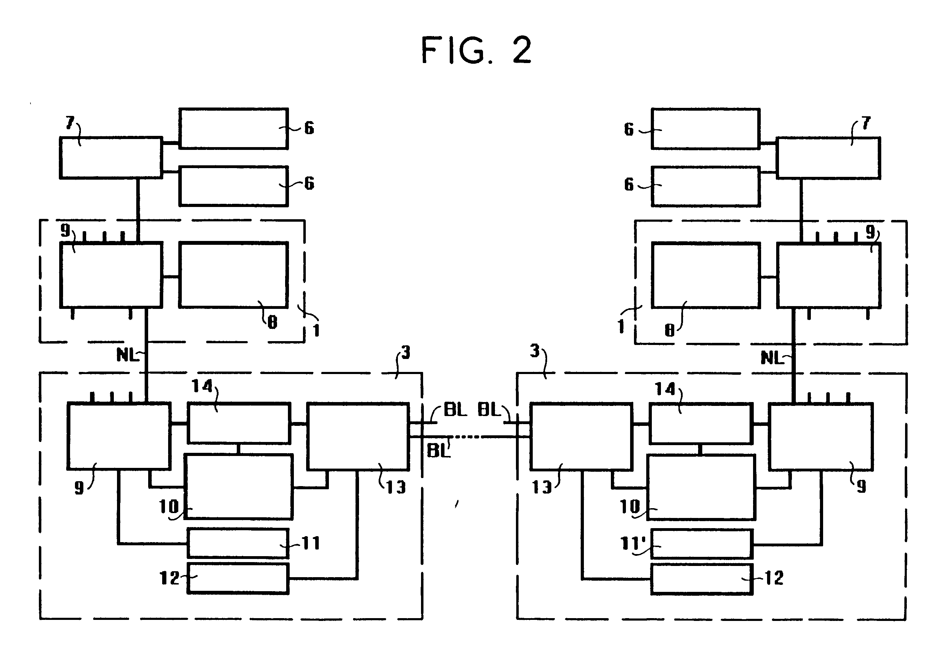

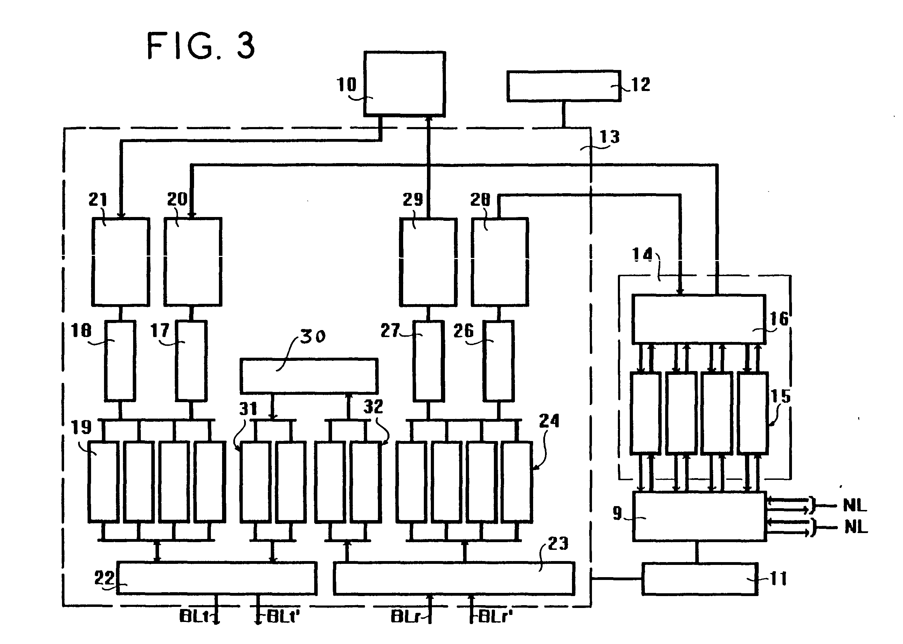

La figure 1 présente un schéma de principe sur lequel sont symbolisées les unités constitutives d'une installation de télécommunications qui sont impliquées dans la mise en oeuvre du procédé de transmission selon l'invention. La figure 2 présente un schéma de principe sur lequel sont symbolisés les principaux éléments constitutifs qui participent à la mise en oeuvre du procédé selon l'invention au niveau des unités de la figure I auxquelles ils sont associés ou dans lesquelles ils sont incorporés.
La figure 3 présente un schéma d'une unité mixte.
Les éléments d'installation de télécommunications présentés en figure 1 comprennent des unités constitutives 1, supports de mode circuit, des unités constitutives 2, supports de mode cellule, et des unités constitutives dites mixtes 3 dans la mesure où elles supportent le mode circuit dans leurs communications avec des unités supportant ce mode et le mode circuit avec les unités supportant ce mode circuit et donc en particulier entre elles.
Ces unités 1, 2 et 3 sont par exemple réparties dans des sous-ensembles 4 dérivés du coeur d'installation multiservice décrit dans le document FR-A-2 665 314, ces sous-ensembles étant susceptibles d'être géographiquement distants. Chaque sous-ensemble 4 regroupe différentes unités agencées de manière connue en soi pour permettre la mise en communication de divers terminaux habituellement conçus pour fonctionner selon un mode déterminé qui n'est pas nécessairement commun à tous. Ce mode est par exemple le mode circuit pour certains, d'autres sont conçus pour exploiter d'autres modes, en particulier à haut débit, par exemple un mode cellule, un mode paquet, un mode circuit à large bande.
En figure 1, deux sous-ensembles d'une même installation ont été envisagés, chacun d'eux est supposé comporter une pluralité d'unités parmi lesquelles seules ont été représentées, deux unités 1 supports de mode circuit, une unité support de mode cellule 2 et une unité mixte circuit-cellule 3 par sous-ensemble.
Dans une forme préférée de réalisation, toutes les unités supports de mode circuit de l'installation sont supposées reliées entre elles en point-à-point par l'intermédiaire de liaisons multiplexes temporelles, bidirectionnelles, référencées NL, dans le sous-ensemble qui les comporte, telles les unités 1 et 2 des deux sous-ensembles 4.
Ces liaisons NL sont ici supposées physiquement structurées de manière identique et sont prévues pour supporter des transmissions fondées sur une même structure de trame temporelle. Cette trame commune a, par exemple et de manière connue, une période égale à 125 microsecondes et elle est supposée divisée en "p" intervalles de temps égaux permettant un transfert d'informations mises sous forme numérique par "p" canaux ayant un débit unitaire de 64 kbit/s, le nombre de ces canaux étant de 32 pour la liaison multiplexe temporelle classique de base, régie par une horloge pilote à 2,048 MHz. Un même flot d'information est ainsi susceptible d'être transmis sous forme d'une suite de modules d'information cycliquement transmis au cours de trames temporelles successives soit un par un au moyen d'un canal élémentaire, soit par groupes par l'intermédiaire de plusieurs canaux temporels élémentaires déterminés d'une même liaison multiplexe temporelle NL.
Les diverses liaisons NL d'une installation ne sont pas nécessairement synchrones dans la mesure où divers générateurs d'horloge plésiochrones, produisant individuellement la même fréquence d'horloge, ici dite première horloge pilote, sont susceptibles d'agir simultanément dans l'installation chacun sur des liaisons NL différentes. Ceci est notamment le cas si, comme dans l'exemple envisagé, deux sous-ensembles de l'installation ne sont reliés par aucune liaison NL et s'ils dépendent de générateurs d'horloge non synchronisés pour l'exploitation des liaisons NL qu'ils comportent respectivement.
Les deux sous-ensembles d'installation présentés en figure 1 sont aussi supposés comporter au moins une et généralement plusieurs unités, supports de mode cellule, dont font aussi partie les unités mixtes 3. Dans la forme de réalisation envisagée, toutes les unités 2 et 3 supports de mode cellule de l'installation sont supposées reliées entre elles par des liaisons BL de transmission à haut débit, dans chaque sous-ensemble concerné. Cette mise en liaison qui s'effectue en point-à-point entre unités d'un même sous-ensemble est susceptible d'être assurée par l'intermédiaire d'une unité de commutation, non représentée ici et éventuellement dupliquée, d'une organisation de commutation de cellule 5 de l'installation, dès que le sous-ensemble considéré comporte plusieurs unités supports de mode cellule.
Suivant la configuration de l'installation envisagée, l'organisation de commutation de cellule 5 est susceptible de comporter des unités de commutation incorporées dans chacun des sous-ensembles comportant des unités supports de mode cellule et éventuellement au niveau d'un étage secondaire de commutation de mode cellule, alors intercalé entre les sous-ensembles, cet étage n'étant pas spécifiquement figuré ici.
Les diverses unités de commutation de cellule des sous-ensembles et éventuellement de l'étage constituant l'organisation de commutation 5 sont par exemple réalisées à l'aide d'éléments de commutation large bande, tels qu'évoqués dans l'article intitulé "Techniques large bande" publié dans le numéro 1 du volume 65 de la Revue des Télécommunications Alcatel.
Quelle que soit la configuration choisie les liaisons BL entre unités supports de mode circuit des sous-ensembles et celles qui unissent ces sous-ensembles sont physiquement structurées de manière identique et sont synchronisées entre elles.
Dans l'exemple envisagé, une seconde fréquence d'horloge pilote qui est par exemple de 155,52 MHz ou un multiple de cette fréquence, notamment 622,08 MHz, est choisie pour toutes les liaisons BL d'une même installation qui constituent donc un réseau synchrone à l'intérieur de cette installation.
A partir du moment où, le débit sur une liaison BL exploitée en mode cellule est supérieur et ici largement supérieur à celui admis pour une liaison NL exploitée en mode circuit, il est envisageable de transmettre, sans perte ni distorsion, une information fournie sous la forme de modules successifs par un ou plusieurs canaux temporels de liaison NL, au cours de trames temporelles successives.
En effet, il est connu qu'en mode cellule, toutes les cellules comportent un même nombre de bits et que le temps nécessaire à l'émission successive des bits d'une cellule par une unité au rythme de l'horloge pilote commune aux unités supportant ce mode est de valeur fixée.
Avec les horloges pilotes envisagées ci-dessus et notamment lorsque celles-ci ont des fréquences respectives de 2,048 et 155,52 MHz, le temps d'émission imparti par cellule est inférieur, ici de peu inférieur, à la durée d'un intervalle de temps de trame réservé à un canal temporel élémentaire en mode circuit. Il est donc possible de garantir la transmission, en mode cellule, de modules d'informations cycliquement fournis au rythme des trames successives en mode circuit, dans un délai qui pour chacun d'entre ces modules n'est pas susceptible de dépasser un seuil déterminé inférieur au délai normal entre modules successivement transmis au cours de trames successives en mode circuit.
A cet effet, il est attribué une priorité aux modules d'information fournis à une unité mixte circuit-cellule à destination en vue d'être transmis en mode cellule par cette unité, le plus généralement avec d'autres informations fournies, ou éventuellement elles aussi réorganisées, pour leur transmission sous forme cellule. Il est alors possible de garantir la réception sans perte ni distorsion des informations initialement fournies en mode circuit et transmises de cette manière, malgré les variations de délai de transmission propres au mode cellule, dans la mesure où ces variations sont ainsi susceptibles d'être maintenues inférieures à la valeur de seuil évoquée ci-dessus.
Dans une forme préférée de réalisation prévue avec les conditions, notamment d'horloge, évoquées ci-dessus, il est prévu de forcer la priorité des modules d'information successivement fournis en mode circuit à une unité mixte en vue de leur transmission en mode cellule vers une autre unité, via une liaison BL, pour que chacun de ces modules soit incorporé dans la première cellule qui est transmise par l'unité mixte chargée de la transmission, après qu'il ait été reçu par cette unité.
Les schémas donnés en figures 2 et 3 permettent de définir les éléments essentiels qui associés ou incorporés dans les unités d'une installation de télécommunications permettent de mettre en oeuvre l'invention.
La figure 2 présente à cet effet deux unités mixtes 3 supposées appartenir à deux sous-ensembles 4 distants d'une même installation, ces unités mixtes sont reliées entre elles par une liaison de transmission à haut débit BL, telle que définie ci-dessus, qui est éventuellement établie en point-à-point au travers d'une ou de plusieurs unités de l'organisation de commutation de cellules 5 de l'installation, ici non représentée.
Ces unités mixtes 3 sont supposées reliées à des unités 1, supports de mode circuit, des sous ensembles qui les comportent respectivement, ainsi qu'à des unités supports de mode cellule, non représentées sur la figure 2.
Chaque unité 1, support de mode circuit, est supposée reliée en point-à-point à chacune des autres unités supportant ce mode dans le sous-ensemble qui la comporte par une liaison multiplexe temporelle, bidirectionnelle, NL, seule étant représentée dans chaque sous-ensemble la liaison NL reliant la seule unité 1 représentée de ce sous-ensemble à l'unité mixte 3 propre à ce dernier.
De manière connue notamment décrite dans la demande de brevet français FR-A-2680930 une des variantes possibles d'unité 1, support de mode circuit, est par exemple destinée à servir au rattachement de terminaux 6 exploitant ce mode et notamment d'appareils de télécommunications, de type terminaux téléphoniques numériques, qui communiquent chacun par l'intermédiaire d'un ou éventuellement de plusieurs canaux temporels de liaison NL. Il est ici supposé, de manière connue en soi, que les terminaux 6 sont reliés à l'unité 1 qui les dessert, via une ou souvent plusieurs interfaces de rattachement 7, individuellement reliée(s) à cette unité 1 par une ou plusieurs liaison(s) multiplexe(s) temporelle(s) individuelle(s) regroupant les communications de plusieurs terminaux.
Les unités 1 sont susceptibles d'avoir des constitutions qui différent suivant la nature des terminaux, c'est-à-dire des appareils ou équipements d'installation qu'elles desservent. Elles comportent généralement une structure de commande 8 organisée autour d'un microprocesseur auquel sont associées des mémoires et une base de temps, non représentés, ainsi qu'un circuit de communication 9, destiné à assurer les échanges d'informations émis en mode circuit entre les terminaux, tels 6, via la ou les interfaces 7, la logique de commande 8 de l'unité 1 considérée et les autres unités 1 ou 3, supports de mode circuit auxquelles cette unité considérée est reliée en point-à-point par des liaisons NL. Un exemple d'un tel circuit de communication 9 pour mode circuit est notamment décrit dans la demande de brevet français FR-A-2680930 déjà mentionnée plus haut, il ne sera donc que sommairement évoqué ici.
Les unités mixtes 3 qui supportent le mode circuit pour leurs communications avec les unités 1 et le mode cellule pour leurs communications entre elles et avec les unités 2, sont elles aussi susceptibles d'avoir des constitutions différentes. Elles comportent généralement une structure de commande 10, le plus souvent supervisée par un microprocesseur auquel un ensemble de mémoires est associé, ces derniers n'étant pas représentés sur la figure 2. Un ensemble de bases de temps est également associé à la structure de commande d'une unité mixte 3; dans la réalisation envisagée, cet ensemble comporte deux modules référencés 11 et 12 dans l'une des unités 3 et 11' et 12 dans l'autre.
Un premier circuit de communication pour mode circuit assure dans chaque unité 3, la mise en communication de cette unité 3 avec chacune des unités 1 auxquelles elle est individuellement et directement reliée en point-à-point par une liaison NL, dans le sous-ensemble de l'installation où elle se trouve.
Ce premier circuit est par exemple un circuit du même type que le circuit 9 prévu dans les unités 1, comme supposé en figure 2. Il est relié à la structure de commande 10 pour les communications de cette dernière avec les unités 1 reliés à lui par des liaisons NL et avec lui-même. Il est régi à cet effet au rythme d'horloge pilote choisi pour les communications en mode circuit, cette horloge pilote étant distribuée par le module de base de temps 11, ou éventuellement 11', logé dans la même unité mixte que lui. Suivant les cas d'exploitation, un module de base de temps 11 ou 11', peut être agencé de manière à fournir l'horloge de base par rapport à laquelle se synchronisent les autres unités, supports de mode circuit d'au moins le sous-ensemble qui le comporte, et éventuellement d'autres sous-ensembles de l'installation, il peut alternativement être agencé de manière à s'asservir par rapport à une autre horloge interne, ou éventuellement externe, par rapport à l'installation considérée.
Un circuit de communication 13 entre unités support de mode cellule est prévu dans chaque unité supportant ce mode et en particulier dans chaque unité mixte 3. Ce circuit de communication 13 en mode cellule est relié à la structure de commande 10 qui le supervise dans l'unité mixte qui le comporte et à au moins une autre unité support de mode cellule, le plus généralement via au moins une unité de commutation de cellule de l'organisation de commutation de cellules, non présentée en figure 2, de l'installation considérée.
Dans l'exemple présenté sur cette figure 2, les circuits de communication 13 respectifs des deux unités mixtes montrées sont interconnectés par une liaison de transmission à haut débit BL établie par l'intermédiaire de l'organisation de commutation de cellules de l'installation, cette organisation étant supposée située au niveau des pointillés montrés au centre de la liaison BL représentée.
Chaque circuit de communication 13 est temporellement régi au rythme, dit de seconde horloge pilote, choisi pour les communications en mode cellule via le réseau synchrone que constituent les liaisons BL de l'installation, ici envisagée, cette horloge pilote lui étant distribuée par le module de base de temps 12 logé dans la même unité, ici mixte, que lui.
Dans la mesure où une unité mixte 3 est destinée à permettre une transmission en mode cellule à une autre unité mixte destinataire intermédiaire, via une liaison BL, d'informations fournies, en mode circuit, par au moins une autre unité 1, support de ce mode, reliée à elle par une liaison NL et à faire restituer ces informations en ce mode circuit par l'unité mixte 3, destinataire intermédiaire, au profit d'au moins une autre unité 1 reliée à celle-ci, il est prévu un circuit passerelle de changement de mode 14 pour permettre l'échange des informations entre les circuits de communication 9 et 13 de l'unité mixte 3.
Chaque circuit passerelle 14 reçoit donc d'une part des modules d'information de mode circuit, transmis avec une période fixe correspondant à celle de la trame temporelle mise en oeuvre. Ces modules sont classiquement constitués soit d'un octet, en particulier dans le cas des modules élémentaires qui d'informations correspondent à des échantillons de signaux de parole codés MIC, soit encore d'un nombre déterminé et limité d'octets. Dans l'exemple envisagé en figure 3, le circuit passerelle 14 représenté permet de traiter les canaux temporels correspondant à quatre liaisons multiplexes temporelles de circuit de communication 9, en assurant la répartition des modules d'informations reçus à raison d'une cellule par liaison et par trame temporelle de mode circuit. Ce circuit passerelle comporte à cet effet quatre modules changeurs de mode 15 permettant chacun de créer une cellule dans laquelle sont insérées les modules d'informations fournies par une liaison multiplexe temporelle au cours d'une trame, en vue du transfert de ces modules en mode cellule.
Chaque changeur de mode assure, par exemple, l'insertion dans trente-deux des cinquante-trois positions d'octets d'une cellule standardisée, les octets susceptibles d'être transmis par une des liaisons multiplexes temporelles de circuit de communication 9; préalablement, il constitue l'en-tête de cette cellule standardisée qui précise notamment sa destination, à partir des informations de destination préalablement fournies en mode circuit, via la liaison multiplexe temporelle considérée.
Chaque changeur de mode 15 assure également l'opération de sens inverse sur les cellules qui lui parviennent de manière à réinsérer, pour exploitation ultérieure, les modules d'informations, contenus dans une cellule, dans une trame de la liaison multiplexe temporelle qu'il dessert, selon l'organisation temporelle qu'avait ces modules préalablement à leur transmission en mode cellule.
Dans la réalisation envisagée, un élément de commutation 16 est inséré entre les changeurs de mode 15 du circuit passerelle 14 et le circuit de communication 13 auquel est relié ce circuit passerelle dans l'unité mixte 3 qui les comporte. Cet élément de commutation 16 assure de manière connue en soi, le multiplexage des cellules produites par les modules changeurs de mode 15 à destination du circuit de communication 13 associé et le démultiplexage des cellules transmises en sens inverse de ce circuit de communication 13 vers l'une ou l'autre des modules changeurs de mode.
D'une part, comme de l'autre, un circuit passerelle 14 peut préférablement ne pas être limité à la seule desserte des circuits 9 et 13 évoqués ci-dessus et peut aussi desservir des terminaux et des liaisons, d'une manière qui ne sera pas développée plus avant ici dans la mesure où elle n'a qu'un rapport indirect avec l'invention. Il est cependant indiqué que des cellules sont également susceptibles d'être transmises par l'intermédiaire de l'élément de commutation 16 via une ou plusieurs liaisons supportant par exemple un mode cellule ou tout autre mode compatible, via éventuellement un module changeur de mode spécialisé, non figuré ici.
Les cellules transitant par l'élément de commutation 16 en vue d'être transmises en mode cellule, via le circuit de communication 13, sont transmises au rythme d'horloge 11 fixé par le module de base de temps 11, afin d'être temporairement prises en compte au niveau d'un ensemble tampon d'adaptation assurant le changement de rythme découlant du changement de mode avant transmission. Cet ensemble regroupe ici des modules tampons référencés 17 à 19, de type premier entré-premier sortie et il reçoit donc des signaux d'horloge provenant de chacun des deux modules de base de temps 11 et 12. Dans la réalisation envisagée, chaque cellule issue de l'élément de commutation 16 subit une encapsulation préalablement à sa prise en compte par l'ensemble tampon. Cette opération, ici assurée par un module logique d'encapsulation 20 spécialisé, est notamment destinée à ajouter à la cellule des informations de routage nécessaires à son transit depuis l'unité mixte 3 où elle est encapsulée jusqu'à l'unité mixte 3, destinataire intermédiaire, à laquelle elle sera transmise en mode cellule et où les modules d'information qu'elle contient seront restitués en mode circuit. Cette encapsulation se traduit par exemple par une addition de trois octets supplémentaires à chaque cellule standard composée de cinquante-trois octets, évoquée plus haut. La cellule obtenue est ici dénommée cellule encapsulée, une indication de priorité lui est ajoutée à ce niveau. Cette indication est forcée à haut niveau pour les cellules contenant des modules d'information destinés à être ultérieurement restitués en mode circuit.
Les cellules encapsulées émanant successivement du module d'encapsulation 20 sont prises en charge par l'ensemble tampon, celles dont la priorité a été forcée au niveau haut sont ici supposées orientées vers le module tampon 17 et de là vers un des modules tampons d'émission 19, alors disponible en réception. Un module tampon 18 prend en charge des cellules encapsulées dont la priorité n'a pas été forcée, ces cellules sont ici supposée encapsulées au niveau d'un second module d'encapsulation 21 susceptible d'être relié à l'élément de commutation 16, s'il est envisagé que celui-ci transmette de telles cellules; dans la réalisation présentée en figure 3, le module d'encapsulation 21 est montré relié à la structure de commande 10 de l'unité mixte 3 qui le comporte, pour les besoins de cette structure.
Les modules tampons 17 et 18 sont reliés en parallèle aux entrées du sous-ensemble que forment les modules tampons d'émission 19, eux-mêmes disposés en parallèle, pour pouvoir indifféremment accéder à chacun de ces derniers.
Toute cellule encapsulée transmise à l'un ou l'autre des modules tampons 17 et 18 est orientée vers le premier module tampon d'émission alors disponible pour la recevoir, en vue de l'émettre, via ici l'une ou l'autre des sorties d'émission, référencées BLt ou BLt', d'une usuelle interface d'émission 22 auxquels se rattachent les liaisons BL reliant l'unité mixte émettrice 3 où se trouvent les modules tampons 17 et 18 considérés à l'unité mixte 3, destinataire intermédiaire.
Pour les raisons évoquées plus haut, le débit en cellules encapsulées établies à partir de modules d'information émanant d'un circuit de communication en mode circuit est inférieur au débit transmissible en mode cellule entre deux unités mixtes, en raison des différences d'horloge. Il est donc toujours possible de disposer des cellules encapsulées non prioritaires entre les cellules encapsulées par l'intermédiaire desquelles sont transmis les modules d'informations évoqués ci-dessus, même si le trafic pour ces dernières est maximal, ce qui ne devrait être prévu que de manière exceptionnelle en exploitation normale.
En raison des différences de débit et d'horloge en mode circuit et en mode cellule, il est toujours possible de disposer d'un module tampon d'émission 19 pour émettre chacune des cellules encapsulées, à haute priorité, successivement prises en compte par le module tampon 17, immédiatement après la cellule encapsulée alors en cours d'émission par un des autres modules tampons d'émission 19 et par conséquent dans un délai toujours inférieur au temps fixe nécessaire à chaque cellule.
Les cellules encapsulées ainsi transmises par liaison BL d'une unité mixte 3 à une autre unité mixte 3, destinataire intermédiaire, sont reçues dans cette dernière par un second ensemble tampon d'adaptation qui a un rôle inverse de celui que forme les modules tampons 17 à 22 et qui assure en le changement de rythme découlant du changement de mode à effectuer après transmission pour les modules d'information à restituer en mode circuit.
Une usuelle interface de réception 23 est classiquement intercalée entre des registres tampons de réception 24 reliés en parallèle du second ensemble tampon de chaque unité mixte 3 et les liaisons BL qui le desservent et qui sont ici montrées aboutissant à des entrées ici référencées BLr et BLr' de l'interface de réception. Les registres tampons ont ici un rôle inverse de celui des registres tampons 19.
Chaque cellule encapsulée reçue au niveau d'une unité mixte destinataire intermédiaire, est initialement prise en charge par le premier des modules tampons de réception 24 qui est alors disponible en réception, en vue d'être transmis à l'un ou l'autre de deux modules tampons 26, 27, vers lequel elle est orientée en fonction de l'indication de priorité qui a été inscrite en elle, lors de son encapsulation.
Cette prise en charge s'effectue au rythme fixe d'horloge de mode cellule donné par le module de base de temps 12 de l'unité mixte et destinataire intermédiaire considérée, étant rappelé que les modules de base de temps 12 sont prévus synchrones dans toute l'installation.
Les cellules encapsulées successivement prises en charge au niveau du module tampon 26 sont celles qui contiennent une indication de priorité de haut niveau, alors que les autres sont ici supposées dirigées vers le module tampon 27. Les unes et les autres sont ensuite désencapsulées par l'intermédiaire de l'un ou l'autre de deux modules de désencapsulation 28, 29. La transmission des cellules d'un module tampon 26 ou 27 au module de désencapsulation 28 ou 29 associé s'effectue au rythme des signaux d'horloge fournis par le module de base de temps 11 de l'unité mixte qui comporte ces modules, étant rappelé que les modules de base de temps 11 des unités supports de mode circuit d'une installation sont susceptibles de n'être que plésiochrones.
Le module de désencapsulation 28 d'une unité mixte permet d'éliminer les données d'encapsulation de cellule, correspondant ici à trois octets supplémentaires, il restitue donc une cellule standard à partir de chaque cellule encapsulée reçue, chaque cellule standard étant ensuite transmise à destination du circuit de communication 9 en mode circuit de l'unité mixte considérée, au rythme des signaux d'horloge fournis par le module d'horloge 11 de cette unité mixte considérée.
Le module de désencapsulation 29 assure les mêmes fonctions pour les cellules encapsulées reçues n'ayant pas l'indication de haute priorité évoquée plus haut et qui sont à transmettre dans des conditions de délai prédéterminées, moins strictes et potentiellement graduées. La désencapsulation de ces cellules est susceptible de conduire à la restitution des informations transmises sous différentes formes en fonction des besoins, notamment sous forme de cellules standards n'ayant pas la haute priorité tout en étant susceptibles d'être transmises, via l'élément de commutation 16 de l'unité mixte considérée, ou sous une autre forme compatible, par exemple sous forme de fichier, après assemblage, vers la structure de commande 10 de cette unité mixte, comme symbolisé sur la figure 3.
Dans la réalisation envisagée, un procédé de régulation par transmission de requêtes par les unités désireuses d'émettre et d'acquiescement par les unités destinataires, permet d'éviter les surcharges de trafic sur les liaisons, ce procédé ne sera pas développé ici dans la mesure où il n'a qu'un rapport indirect avec l'invention. Ce procédé implique la présence, dans chaque circuit de communication 13, d'un automate, ici référencé 30 et de modules tampons d'émission 31 et de réception 32, correspondant fonctionnellement et respectivement les premiers nommés aux modules tampons 19 et les autres aux modules tampons 24 pour l'émission et la réception des indications de requête et d'acquiescement prévues ajoutées aux données d'encapsulation des cellules encapsulées, par exemple dans des positions de bits déterminées des trois octets d'encapsulation prévues par cellule encapsulée.
Par ailleurs, les cellules issues du module de désencapsulation 28 sont aiguillées, en fonction de leurs en-têtes respectifs, par l'élément de commutation 16 associé, vers les modules changeurs de mode 15 du circuit passerelle 14 de l'unité mixte qui les comporte.
Chaque module changeur 15 redistribue dans les canaux temporels de la liaison multiplexe temporelle qu'il dessert, les modules d'information contenus dans une cellule reçue, de manière à les repositionner temporellement, comme ils étaient originellement, au cours de la trame destinée à servir à leur transmission.
Etant rappelé que la variation du délai dû à la transmission en mode cellule est limitée par le choix de transmission des cellules, selon l'invention, à un écart maximal correspondant au temps imparti par cellule à l'émission, il est également proposé de compenser à ce niveau les variations en temps, d'allure progressive et cyclique, qui affectent les groupes successifs d'octets des modules d'information destinés à une même liaison multiplexe temporelle, en fonction des cellules respectives par lesquelles ils ont été transmis.
Comme déjà indiqué plus haut, en l'absence de synchronisation particulière entre deux unités entre lesquelles sont échangées en mode cellule des informations initialement fournies en mode circuit, il y a restitution de ces informations, dans les conditions de temps fixées par les signaux d'horloge fournis localement au niveau de l'unité destinataire intermédiaire où s'effectue le changement de mode pour retrouver le mode circuit, après transmission en mode cellule.
Il est aussi possible d'aligner l'horloge en mode circuit régissant une unité destinataire sur celle d'une unité d'où émanent des informations, alors en mode circuit, qui sont transmises en mode cellule sur le trajet unissant ces deux unités.
En effet, dans ces conditions, il est possible de réaliser une mise en communication convenable de terminaux fonctionnant en mode circuit sans que soit nécessaire une pleine synchronisation des horloges régissant séparément ces terminaux, via les unités auxquelles ils sont rattachés.
Comme indiqué plus haut, un ou des flot(s) d'information reçus ou fournis au niveau d'une unité par l'intermédiaire d'un ou de plusieurs canaux temporels élémentaires au cours de trames temporelles successives définies par une première horloge de mode circuit, telle 11 en figure 2, sont susceptibles d'être destinés à des terminaux vers lesquels ils seront transmis au cours de trames successives définies par une horloge de mode circuit, telle 11', régissant l'unité à laquelle ces terminaux sont rattachés, après avoir été transmis en mode cellule sur au moins une partie du trajet qu'ils accomplissent entre les deux unités ici évoquées. Cette transmission en mode cellule s'effectue à un rythme d'horloge différent qui est celui fourni à cet effet par les bases de temps 12.
Comme il est connu, la transmission d'informations en mode cellule implique l'insertion d'une indication, ici dite d'identification de chemin, en tête de chaque cellule, cet indication identifiant les deux unités entre lesquelles la cellule est échangée. Il est ainsi défini un chemin virtuel "VP" considéré comme emprunté par toutes les cellules qui sont émises d'une de ces deux unités vers l'autre et qui comportent donc la même indication de chemin.
De plus, un même chemin virtuel est susceptible d'être emprunté par des cellules correspondant à des informations parvenant successivement d'un même canal temporel, ou éventuellement de plusieurs, en provenance d'un même émetteur et vers un ou éventuellement plusieurs même(s) destinataires, soit pratiquement via un même circuit virtuel individuellement identifiable. Une indication individuelle de circuit virtuel "VC" définissant l'émetteur et le destinataire est aussi incluse dans l'en-tête de chaque cellule avec l'indication du chemin virtuel "VP" emprunté.
Dans le cas d'un flot d'information fourni en mode circuit en bande étroite, chaque module d'information parvenant à destination d'un même circuit virtuel, par exemple un circuit virtuel "VCₙ", au cours d'une trame de mode circuit définie par une base de temps correspondante d'émission, telle que la base de temps 11, est transmis par une cellule via le chemin virtuel concerné, par exemple "VPᵢ". La cellule de transmission d'un tel module d'information est individualisée de manière telle qu'elle soit reconnaissable comme une cellule à transmettre en un temps minimum déterminé, ici dit de traversée, contenue entre deux valeurs déterminées. La combinaison d'indications "VPᵢ", "VCₙ" est donc produite à un rythme correspondant à celui des trames en mode circuit fixé par la base de temps 11 et avec une gigue liée à la transmission par cellule. L'amplitude maximale de cette gigue correspond à la durée de transmission prévue par une cellule au rythme fixé par l'horloge large bande de la base de temps 12 régissant l'unité, ici mixte telle l'unité 4, émettant les cellules.
Il est possible d'exploiter ceci pour aligner la base de temps, telle 11' en figure 2, fournissant l'horloge en mode circuit permettant de restituer des informations en mode circuit après transmission en mode cellule, sur une base de temps, telle 11, fournissant l'horloge en mode circuit ayant régi ces informations, avant leur encapsulation en cellules. Comme les indications de chemin virtuel "VP" et de circuit virtuel "VC" contenues dans les cellules sont déjà exploitées par l'unité mixte recevant ces cellules, il est possible de transmettre à un filtre au moins les indications "VC" , par exemple "VCₙ", successivement reçues pour disposer d'indications d'alignement d'horloge affectées d'une gigue dont l'amplitude maximale correspond à la durée d'une cellule.
Le filtre de type connu en lui-même permet de produire une indication de valeur moyenne qui est exploitée pour aligner la base de temps 11' qui fournit l'horloge de mode circuit en bande étroite du destinataire. Ce filtre, non figuré ici, est par exemple incorporé dans l'unité mixte 3 de desserte du destinataire, en amont de la base de temps 11' sur la commande de réglage de laquelle il vient agir. Cette action vient par exemple temporairement se substituer ou éventuellement se substituer à celle permettant à la base de temps de s'auto-réguler, cette base de temps comportant par exemple un oscillateur commandé en tension et régulé par 'l'intermédiaire d'une boucle de verrouillage, selon une technique usuelle en ce domaine.
Ceci permet donc d'aligner une base de temps, distante, fournissant une horloge de mode circuit sur une base de temps de même mode et ayant donc même fréquence, avec laquelle elle n'est pas directement liée, dans le cadre d'une installation de télécommunications où ces bases de temps régissent des unités appartenant à deux sous-ensembles distincts reliés entre eux en mode cellule au travers d'au moins une liaison large bande reliant deux unités mixtes appartenant chacune à un sous-ensemble différent. Bien entendu, la base de temps prise comme référence d'alignement peut elle-même être dépendante d'une horloge de niveau supérieur en qualité, par exemple d'une horloge de réseau public dans le cas d'une installation privée usuelle où une telle horloge de niveau élevé n'est normalement pas prévue pour des raisons de coût.

## Revendications

1. Procédé destiné à permettre une transmission, par l'intermédiaire d'une liaison exploitée en mode cellule entre deux unités d'installation de télécommunications, d'informations préalablement fournies sous forme multiplexée dans le temps et par conséquent sous forme modulaire à une des deux unités par l'intermédiaire d'un ou de plusieurs canaux temporels élémentaires de liaison en mode circuit à bande étroite, lorsque les deux unités sont respectivement régies, en mode circuit, de manière synchrone ou par deux horloges plésiochrones, consistant à :
- forcer la priorité de transmission, sur lá liaison exploitée en mode cellule, de chaque module d'information préalablement en mode circuit qui est destiné à être communiqué d'une unité à destination de l'autre, afin que chacun de ces modules d'information soit inséré dans la première cellule qui est transmise par l'unité chargée de la transmission, après qu'il ait été reçu par cette dernière,
- et réinsérer cycliquernent, dans un ou plusieurs canaux temporels déterminés, sous le contrôle de l'horloge régissant le mode circuit au niveau de l'unité destinataire, les dits modules d'information successivement communiqués en mode cellule à cette unité destinataire, en permettant ainsi la reconstitution intégrale des informations sous leur forme initiale ;
**caractérisé en ce qu**'il consiste en outre à aligner l'horloge régissant le mode circuit au niveau d'une unité destinataire sur une première horloge pilote de canaux temporels élémentaires de mode circuit à partir des données desquels ont été formés des modules d'information, successivement produits à un rythme de trame fixé par ladite première horloge et ultérieurement reçus en mode cellule par l'intermédiaire d'une unité exploitant les deux modes évoqués ci-dessus,
ledit alignement étant réalisé par l'intermédiaire d'un signal, de type valeur moyenne, obtenu des cellules reçues, à partir des occurrences d'un marqueur constitué par une combinaison caractéristique de données apparaissant au rythme de trame avec une gigue liée à la transmission par cellules pour les informations émanant d'au moins un de ces canaux temporels transmis.

2. Agencement pour la mise en oeuvre du procédé selon la revendication 1, pour installation de télécommunications comportant des unités (1) supports de mode circuit à bande étroite pour des terminaux (6) exploitant ce mode, ces unités étant reliées entre elles en point à point par des liaisons (NL) spécifiquement agencées et temporellement régies pour un tel mode, et des unités (2) supports de mode cellule également reliées en point à point, par des liaisons (BL) spécifiquement agencées et régies pour ce mode cellule, via éventuellement un ou plusieurs éléments de commutation d'une organisation de commutation de cellule (5) de l'installation comportant au moins deux unités mixtes (3) reliées d'une part entre elles par liaison pour mode cellule et d'autre part chacune à une unité et/ou à des terminaux, supports de mode circuit ;
chaque unité mixte qui est munie d'un circuit de communication (9 ou 13) pour ses échanges en chacun des modes, de même que les unités avec lesquelles elle communique en l'un de ces modes, comportant de plus un circuit passerelle (14) assurant la mise en cellule des modules d'information transmis par une liaison multiplexe temporelle de mode circuit au cours d'une trame et inversement la restitution des modules d'information contenues dqns une cellule reçue, dans la position temporelle qu'ils avaient originellement, avant passage en mode cellule, au cours de la trame temporelle au cours de laquelle ils sont restitués en mode circuit ;
**caractérisé en ce qu**'au moins une des unités mixtes (3) qu'il comporte est munie de moyens pour aligner l'horloge pilote de mode circuit localement fournie par un module de base de temps (11) qu'elle comporte, pour au moins un terminal (6) et/ou une unité (1) support de ce mode, sur une première horloge pilote régissant des canaux temporels élémentaires de mode circuit à partir des données desquels ont été formés des modules d'information, successivement produits à un rythme de trame fixé par cette première horloge et ultérieurement reçus en mode cellule par l'unité mixte ;
les dits moyens comportant un filtre fournissant un signal d'alignement d'horloge locale à partir des modules d'information reçus ;
ledit filtre produisant un signal d'alignement, de type valeur moyenne, à partir des occurrences d'un marqueur constitué par une combinaison caractéristique de données apparaissant au rythme de trame et avec une gigue liée à la transmission par cellule, pour les informations émanant d'au moins un des canaux temporels transmis.

3. Agencement selon la revendication 2, **caractérisé en ce que** chaque unité mixte comporte un circuit passerelle (14) incorporant des moyens de changement de mode (15) permettant, d'une part, de créer une cellule dans laquelle sont insérées les modules d'informations fournies par une liaison multiplexe temporelle au cours d'une trame, d'autre part de redistribuer dans les canaux temporels d'une liaison multiplexe temporelle qu'il dessert, les modules d'information contenues dans une cellule reçue, de manière à les repositionner temporellement, comme ils étaient originellement, au cours de la trame destinée à servir à leur transmission.

4. Agencement selon la revendication 3, **caractérisé en ce que** chaque unité mixte comporte un circuit de communication en mode cellule incorporant des moyens (20, 21) pour attribuer des priorités aux cellules à transmettre et notamment une priorité de haut niveau aux cellules transmettant des modules d'information fournis et à restituer en mode circuit, et des moyens tampons de transfert à structure parallèle (17 à 19) pour permettre la transmission des cellules entre unités mixtes en fonction des priorités attribuées et une émission des cellules à haute priorité dans un délai inférieur pour chacune au temps imparti pour une cellule à l'émission.

5. Agencement selon la revendication 3, **caractérisé en ce que** chaque unité mixte comporte un circuit de communication en mode cellule (13) incorporant de plus des moyens tampons de transfert à structure parallèle ( 24, 26, 27) pour permettre la séparation des cellules reçues d'une autre unité mixte en fonction des indications des priorités attribuées par cette dernière et pour compenser en liaison avec les moyens de changement de mode (15) du circuit passerelle de la même unité mixte, les retards variables introduits par la transmission en mode cellule, pour chacun des groupes d'octets correspondant aux modules d'information, à restituer en mode circuit, contenus dans une des cellules successives reçues à destination d'une même liaison multiplexe temporelle.

## Claims

1. Method of transmitting over a cell mode link between two telecommunication installation units data previously supplied in time-division multiplexed form and consequently in modular form to one of the two units by means of one or more basic narrowband circuit mode channels when the two units are respectively controlled in circuit mode in synchronous manner or by two plesiochronous clocks, consisting in:
- forcing the transmission priority on the cell mode link of each data module previously in circuit mode which is intended to be communicated from one unit to the other so that each of said data modules is inserted into the first cell transmitted by the unit responsible for transmission, after it is received by the latter,
- and re-inserting said data modules successively communicated in cell mode to said destination unit cyclically into one or more specific channels under the control of the clock controlling the narrowband circuit mode at the destination unit, so allowing integral output of the data in its original form;
**characterized in that** the circuit mode clock at a destination unit is also aligned to a first circuit mode basic channel clock on the basis of the data from which the data modules have been formed, successively produced at a frame timing rate set by said first clock and subsequently received in cell mode via a unit operating in both said modes,
said alignment being achieved by means of an average value type signal obtained from the received cells, on the basis of occurrences of a marker comprising a characteristic combination of data appearing at the frame timing rate and subject to jitter associated with transmission in the form of cells for the data emanating from at least one of the channels transmitted.

2. System for implementing the method according to claim 1 for a telecommunications installation including narrowband circuit mode units (1) for narrowband circuit mode terminals (6), said units being interconnected by point-to-point links (NL) specifically adapted and temporally controlled for this mode and cell mode units (2) connected by point-to-point links (BL) specifically adapted and controlled for cell mode, possibly via one or more switching elements of a cell switching organization (5) of the installation, said system including at least two hybrid units (3) connected to each other by a cell mode link and each to a circuit mode unit and/or terminals;
each hybrid unit which is provided with a communication circuit (9 or 13) for communications in each of the modes, and likewise the units with which it communicates in one of said modes, further including a gateway circuit (14) for converting to cell form data modules transmitted by a circuit mode time-division multiplex link during a frame and conversely restoring data modules contained in a received cell to their original time position, before conversion to cell mode, during the frame in which they are output in circuit mode;
**characterized in that** at least one of the hybrid units (3) has means for aligning the circuit mode clock supplied locally by its timebase module (11) for at least one circuit mode terminal (6) and/or circuit mode unit (1) to a first clock timing circuit mode basic channels on the basis of data from which the data modules are formed, successively produced at a frame timing rate fixed by said first clock and subsequently received in cell mode by the hybrid unit;
said means including a filter supplying a local clock alignment signal from the data modules received;
said filter producing an average value type alignment signal on the basis of occurrences of a marker comprising a characteristic combination of data appearing at the frame timing rate and subject to jitter associated with transmission in the form of cells, for data emanating from at least one of the channels transmitted.

3. System according to claim 2, **characterized in that** each hybrid unit includes a gateway circuit (14) incorporating mode changing means (15) for creating a cell into which are inserted the data modules supplied by a time-division multiplex link during a frame and for redistributing on the channels of a time-division multiplex link that it serves the data modules contained in a received cell so as to reposition them in time, as they were originally, during the frame for transmitting them.

4. System according to claim 3, **characterized in that** each hybrid unit includes a cell mode communication circuit incorporating means (20, 21) for assigning priorities to cells to be transmitted including a high priority level for cells transmitting data modules supplied and to be output in circuit mode and parallel structured transfer buffer means (17 to 19) for transmitting cells between hybrid units according to the priorities assigned and transmitting high priority cells in a time period shorter for each cell than the time allotted to sending a cell.

5. System according to claim 3, **characterized in that** each hybrid unit includes a cell mode communication circuit (13) further including parallel structured transfer buffer means (24, 26, 27) for separating cells received from another hybrid unit according to priority indications assigned by the latter and for compensating in conjunction with the mode changing means (15) of the gateway circuit of the same hybrid unit the variable time-delays introduced by transmission in cell mode for each group of bytes corresponding to the data modules to be output in circuit mode contained in one of the successive cells received addressed to the same time-division multiplex link.

## Patentansprüche

1. Verfahren, dazu bestimmt, über eine im Zellenmodus genutzte Verbindung zwischen zwei Einheiten einer Telekommunikationsanlage eine Übertragung von Informationen zu ermöglichen, die zuvor in zeitlich gemultiplexter Form und infolgedessen in modularer Form an eine der zwei Einheiten über einen oder mehrere elementare zeitliche verbindungskanäle im schmalbandigen leitungsvermittelten Modus geliefert worden sind, wobei diese zwei Einheiten jeweils im leitungsvermittelten Modus synchron oder durch zwei plesiochrone Takte gesteuert sind, welches darin beruht,
- auf der im Zellenmodus genutzten Verbindung die Priorität der Übertragung jedes zuvor im leitungsvermittelten Modus befindlichen Informationsmoduls zu erzwingen, das dazu bestimmt ist, von einer Einheit an die andere übertragen zu werden, so daß jedes dieser Informationsmodule in die erste Zelle eingefügt wird, die von der mit der Übertragung beauftragten Einheit gesendet wird, nachdem es von letzterer empfangen worden ist,
- und unter der Steuerung des den leitungsvermittelten Modus an der Empfängereinheit steuernden Taktes die nacheinander im Zellenmodus an diese Empfängereinheit übertragenen Informationsmodule zyklisch in einen oder mehrere vorgegebene zeitliche Kanäle wieder einzufügen und so die vollständige Wiederherstellung der Informationen in ihrer ursprünglichen Form zu ermöglichen,
**dadurch gekennzeichnet,** daß es ferner darin beruht, den Takt, der den leitungsvermittelten Modus an einer Empfängereinheit steuert, an einem ersten Vorsteuertakt von elementaren zeitlichen Kanälen des leitungsvermittelten Modus auszurichten, anhand von deren Daten Informationsmodule gebildet worden sind, die nacheinander mit einem vom dem ersten Takt festgelegten Rahmenrhythmus erzeugt werden und dann im Zellenmodus über eine Einheit empfangen werden, die die zwei oben erwähnten Modi anwendet,
wobei die Ausrichtung über ein Signal vom Mittelwerttyp realisiert wird, das aus den empfangenen Zellen anhand der Vorkommnisse eines Markers erhalten wird, der durch eine charakteristische Kombination von Daten gebildet ist, die im Rahmenrhythmus mit einem Jitter auftritt, der mit der zellenweisen Übertragung für die aus wenigstens einem dieser übertragenen zeitlichen Kanäle stammenden Informationen verknüpft ist.

2. Vorrichtung für die Durchführung des verfahrens nach Anspruch 1, für eine Telekommunikationsanlage mit schmalbandigen leitungsvermittelten Modus unterstützenden Einheiten (1) für diesen Modus anwendende Terminals (6), wobei diese Einheiten untereinander von Punkt zu Punkt durch spezifisch eingerichtete und für einen solchen Modus zeitlich gesteuerte Verbindungen (NL) verbunden sind, und Zellenmodus unterstützende Einheiten (2), die ebenfalls von Punkt zu Punkt über Verbindungen (BL) verbunden sind, die spezifisch für diesen Zellenmodus eingerichtet und gesteuert sind, ggf. über ein oder mehrere Vermittlungselemente einer Zellenvermittlungsorganisation (5) der Anlage, mit wenigstens zwei gemischten Einheiten (3), die einerseits untereinander durch eine Verbindung für Zellenmodus und andererseits jeweils mit einer Einheit und/oder Endgeräten, die den leitungsvermittelten Modus unterstützen, verbunden sind;
wobei jede gemischte Einheit, die mit einer Kommunikationsschaltung (9 oder 13) für ihren Austausch in
jedem dieser Modi ausgestattet ist, sowie die Einheiten, mit denen sie in einem dieser Modi kommuniziert, ferner eine Übergangsschaltung (14) aufweisen, die die Umsetzung von auf einer Zeitmultiplexverbindung im leitungsvermittelten Modus im Laufe eines Rahmens übertragener Informationsmodule in zellen und
umgekehrt die Wiederherstellung von in einer empfangenen Zelle enthaltenen Informationsmodulen an der ursprünglich vor dem Übergang in den Zellenmodus innegehabten Zeitposition im Laufe des zeitlichen Rahmens, in dem sie im leitungsvermittelten Modus wiederhergestellt werden, gewährleistet;
**dadurch gekennzeichnet**, daß wenigstens eine der gemischten Einheiten (3), die sie umfaßt, mit Mitteln zum Ausrichten des Vorsteuertakts des leitungsvermittelten Modus, der lokal von einem Zeitbasismodul (11) geliefert wird, das sie umfaßt, für wenigstens ein Terminal (6) und/oder eine diesen Modus unterstützende Einheit (1) auf einen ersten Vorsteuertakt, der die elementaren zeitlichen Kanäle des leitungsvermittelten Modus steuert, anhand von deren Daten Informationsmodule gebildet worden sind, die nacheinander in einem von diesem ersten Takt festgelegten Rahmenrhythmus erzeugt und dann im Zellenmodus von der gemischten Einheit empfangen werden, ausgestattet ist,
wobei diese Mittel ein Filter umfassen, das ein Ausrichtungssignal des lokalen Taktes anhand der empfangenen Informationsmodule liefert;
wobei das Filter ein Ausrichtungssignal vom Mittelwerttyp anhand der Vorkommnisse eines Markers erzeugt, der durch eine charakteristische Kombination von Daten gebildet ist, die im Rahmenrhythmus und mit einem Jitter auftritt, der mit der zellenweisen Ubertragung der aus wenigstens einem der übertragenen zeitlichen Kanäle kommenden Informationen verknüpft ist.

3. Vorrichtung nach Anspruch 2, **dadurch gekennzeichnet**, daß jede gemischte Einheit eine Übergangsschaltung (14) umfaßt, die Modusänderungsmittel (15) enthält, die es einerseits ermöglichen, eine Zelle zu erzeugen, in der die von einer Zeitmultiplexverbindung im Laufe eines Rahmens gelieferten Informationsmodule eingefügt sind, und andererseits auf die zeitlichen Kanäle einer von ihr bedienten Zeitmultiplexverbindung die in einer empfangenen Zelle enthaltenen Informationsmodule so zu verteilen, daß sie zeitlich so repositioniert werden, wie sie ursprünglich im Laufe des zu ihrer Übertragung bestimmten Rahmens waren.

4. Vorrichtung nach Anspruch 3, **dadurch gekennzeichnet**, daß jede gemischte Einheit eine Kommunikationsschaltung für Zellenmodus umfaßt, die Mittel (20, 21) zum Zuweisen von Prioritäten an zu übertragende Zellen und insbesondere einer Priorität von hohem Niveau an Zellen, die im leitungsvermittelten Modus gelieferte und wiederzugebene Informationsmodule enthalten, sowie Übertragungspuffermittel von paralleler Struktur (17 bis 19) umfaßt, um die Übertragung der Zellen zwischen gemischten Einheiten in Abhängigkeit von den zugewiesenen Prioritäten und ein Senden der Zellen mit hoher Priorität mit einer Verzögerung zu ermöglichen, die für jede kleiner ist als eine für eine Zelle beim Senden zugeteilte Zeit.

5. Vorrichtung nach Anspruch 3, **dadurch gekennzeichnet**, daß jede gemischte Einheit eine Kommunikationsschaltung für Zellenmodus (13) umfaßt, die ferner Übertragungspuffermittel mit paralleler Struktur (24, 26, 27) umfaßt, um die Trennung der von einer anderen gemischten Einheit empfangenen Zellen in Abhängigkeit von den von dieser letzteren zugeteilten Prioritätsangaben zu ermöglichen und auf der Verbindung mit den Modusänderungsmitteln (15) der Übergangsschaltung der gleichen gemischten Einheit die veränderlichen Verzögerungen zu kompensieren, die durch die Übertragung im Zellenmodus für jede der Gruppen von Oktetts hervorgerufen werden, die den im leitungsvermittelten Modus wiederherzustellenden Informationsmodulen entsprechen, die in einer der aufeinanderfolgenden, für eine gleiche Zeitmultiplexverbindung bestimmten Zellen enthalten sind.
